# EUROPEAN PATENT APPLICATION

(11) **EP 1 444 883 A1**
(43) Date of publication of application: **11.08.2004**
(21) Application number: 03257125.9
(22) Date of filing: 12.11.2003
(51) Int. Cl.: A01G 9/02

(54) **Production of flower pots**

(30) Priority: 10.02.2003 US 361118
(71) Applicant: Vollers, Gary L., Northridge, CA 91326 (US); Uchiyama, Donald T., Downey, CA 90240 (US)
(72) Inventor: Vollers, Gary L., Northridge, CA 91326 (US); Uchiyama, Donald T., Downey, CA 90240 (US)
(74) Representative: W.P. Thompson & Co.

(57) **Abstract**

A method of producing a flower pot (10) that includes forming an upright pot wall consisting of plastic material and having truncated conical shape; forming a pot base consisting of plastic material and having generally circular shape, the base having a rim that projects downwardly; assembling the base to lowermost annular extent of the wall; and heat sealing the rim to the wall.

## Description

### BACKGROUND OF THE INVENTION

This invention relates generally to producing low cost pots to receive vegetation such as flowers, for display, for example in nurseries. More particularly it concerns method and means for producing such pots in an efficient, rapid and low cost manner.

There is need for very large numbers of low cost durable flower pots as for use at or by nurseries. For that purpose, very low cost methods of pot production are required.

### SUMMARY OF THE INVENTION

It is a major object of the invention to provide unusually effective method and means for meeting the above need. Basically, the method of the invention is embodied in the following steps:
a) forming an upright pot wall consisting of plastic material and having truncated conical shape,
b) forming a pot base consisting of plastic material and having generally circular shape, the base having a rim that projects downwardly,
c) assembling the base to lowermost annular extent of said wall, and
d) heat sealing said rim to said wall. Fill may then be introduced into such pots, the fill including at least one of the following:
   i) soil in which vegetation roots are grown,
   ii) vegetation roots,
   iii) flower roots in soil,
   iv) Water in one of said i), ii) and iii) fill, roots or soil.
Drainage openings are typically provided to extend through the base. The thicknesses of the thin plastic wall and base are between .005 and .030 inch, to conserve plastic material without sacrificing pot rigidity.

There is also provided an identification sleeve to fit onto the pot wall and to mechanically and releasably retain the sleeve to the wall, enabling its removal if needed for changes in identification. To this end, the sleeve desirably remains unbonded to the pot well, yet positively retained in position until removed, if desired.

Preferably the wall is formed by cutting a plastic sheet to form a blank, forming said blank into said truncated conical wall shape having overlapping edges, and heat sealing said overlapping edges.

The invention will now be further described by way of example by reference to details of an illustrative embodiment, which will be more fully understood from the following specification and drawings, in which:-

### DRAWING DESCRIPTION

Fig. 1 is a perspective view showing a flower pot incorporating the invention;
Fig. 2 is a perspective view of a base of the Fig. 1 pot;
Fig. 3 is an enlarged vertical section, showing the manner of base attachment to the pot wall;
Fig. 4 is like Fig. 3, but shows another form of base attachment to the pot side wall;
Fig. 5 is a view like Fig. 1 showing mechanical retention of a sleeve to the pot wall, as by a protrusion;
Fig. 6 is a view of the Fig. 5 pot, without the sleeve attached;
Fig. 7 is an enlarged vertical elevation, showing upward assembly of the sleeve to the pot side wall;
Fig. 8 is like Fig. 7, but showing positive mechanical retention of the sleeve to the pot side wall, the sleeve blocked against downward removal;
Fig. 9 is a view like Fig. 8 but showing forcible downward removal of the sleeve from the pot; and
Fig. 10 is a view like Fig. 6 but showing local and narrow ridges formed on the pot side wall, for retaining a sleeve in assembled position, while allowing wall flexing.

### DETAILED DESCRIPTION

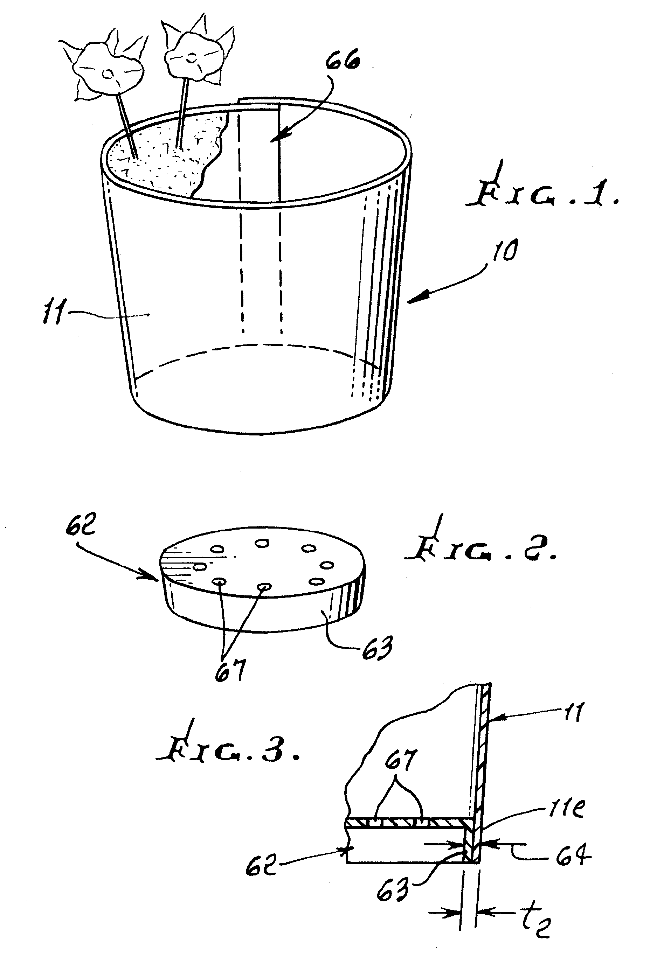

Referring to Figs. 1-3, the method of forming the flower pot 10 includes the steps:
a) forming an upright pot wall consisting of plastic material and having truncated conical shape,
b) forming a pot base consisting of plastic material and having generally circular shape, the base having a rim that projects downwardly,
c) assembling the base to lowermost annular extent of said wall, and
d) heat sealing said rim to said wall.

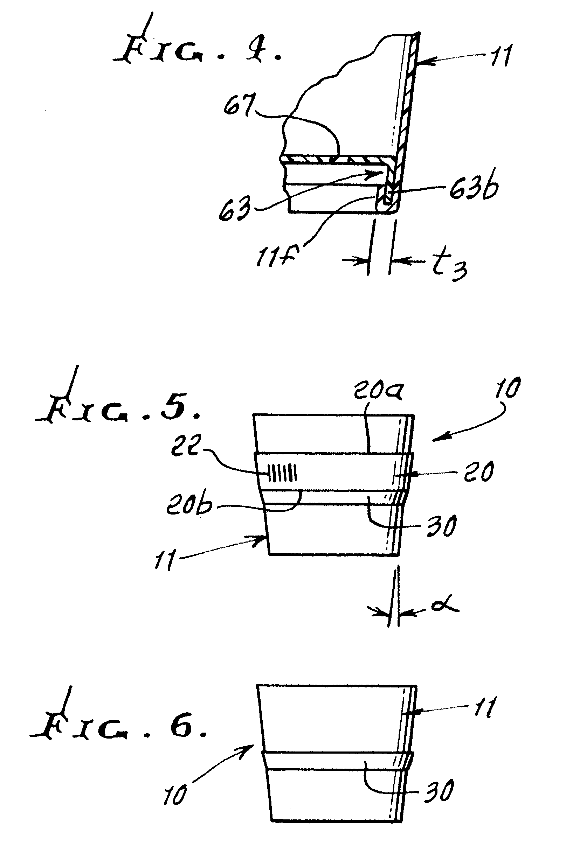

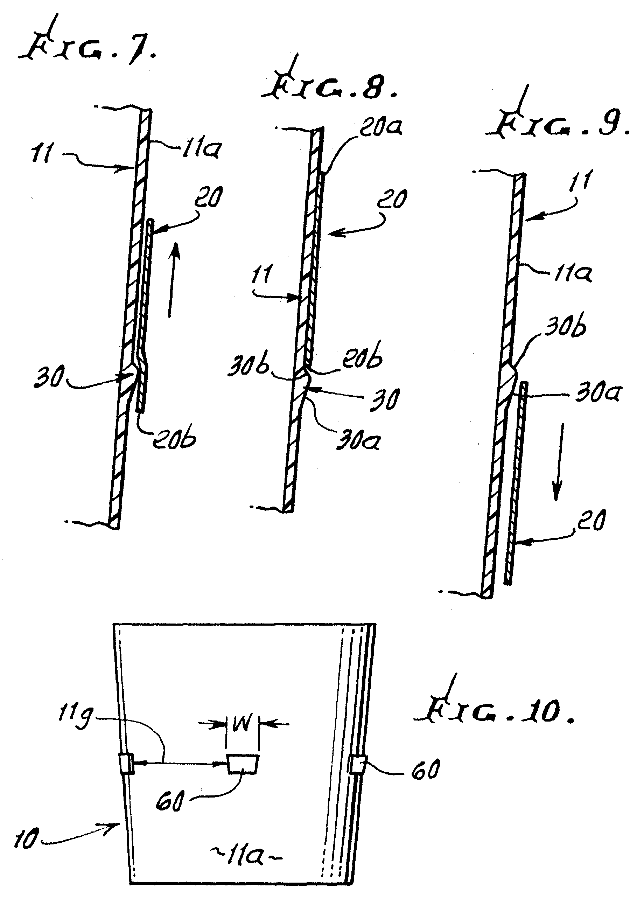

As seen in Figs. 2 and 3, the separately formed base 62 of the pot has generally circular shape and an annular rim 63 that projects downwardly. In Fig. 3 the rim is shown as being annularly heat sealed at 64 to the lowermost extent 11e of the side wall 11, providing a sturdy thickened overall wall of thickness t₂, to support the pot. Side wall 11 may have been preliminarily formed as by bending a sheet of plastic material into truncated conical shape, and then heat sealing overlapping edges of the sheet as at side zone 66 seen in Fig. 1. Rim 63 bridges the side wall overlapping edges, at their inner sides. The plastic material of the side wall and base typically consist of one of the following:
i) polypropylene
ii) polyethylene
iii) PET
iv) other thermoplastic material.

Thicknesses of the plastic side wall and base are between about .005 and .030 inch. Drainage openings 67 are dispersed in and provided through the base bottom wall 62a, and have cross-section dimensions between 1/16 and ½ inch.

Fig. 4 shows the lowermost extent of the pot side wall 11 wrapped underneath the base rim lip 63b, and back upwardly at 11f, adjacent the inner side of the rim 63, to provide enhanced total thickness t₃, for very sturdy support.

An identification sleeve 20 may be provided for assembly onto the pot, and it typically has the form of a truncated cone, with taper angularity α the same as that of the pot wall, so as to fit the wall when upwardly assembled to it, as in Figs. 5 and 8. Fig. 7 shows the sleeve being moved upwardly, toward Fig. 4 fit position. Sleeve 20 is also typically made of thin plastic material, its thickness being less than that of the wall. Upper and lower edges of the sleeve are indicated at 20a and 20b. The sleeve typically bears surface indicia, as represented by bar code 22, or a graphic emblem, picture, or colors may be on the sleeve. If the sleeve were to be bonded to the wall 11, a very serious problem would exist, in the event sleeve removal, as from thousands of pots, became necessary.

A way is provided to mechanically retain the sleeve on pot wall, while at the same time enabling easy and quick removal, if needed. For this purpose, a sleeve retaining blocking part or parts is or are provided on the pot wall 11, to project relative to surface 11a for camming the sleeve to become mechanically blocked by that part or parts against inadvertent removal from the container. In this regard, the blocking part or parts is or are configured to project outwardly relative to said surface, and the sleeve is caused to pass by that part or parts during assembly. See for example the retainer ridge 30 on wall 11 and projecting outwardly at the bottom edge 20b of the sleeve, to mechanically support the sleeve as shown in Fig. 8. That ridge is shown as extending at least part way about the wall 11, and as having an upwardly and outwardly sloped cam surface 30a, just below the ridge upper surface 30b that supports the sleeve lower edge. Cam surface 30a serves to resiliently expand the sleeve, as the sleeve is assembled upwardly, as in Fig. 7 over the ridge, to ultimately fit the container wall as seen in Fig. 8. Also, the ridge may have a downwardly rounded or sloped upper surface 30b, to ease the sleeve over the ridge during downward removal off the container, as seen in Fig. 5. Since the sleeve is not bonded to wall 11a, it may be cut between edges 20a and 20b to enable quick removal off the container.

Fig. 10 shows a modification, wherein one or more limited width blocking parts 60 are provided on the wall 11, to support a sleeve. The use of such parts of limited width "W", further facilitate assembly of the sleeve onto the wall 11, as well as sleeve downward removal, since the sleeve need expand outwardly only locally, over 60 and since the wall extent 11g between the blocking parts 60 can be deflected inwardly to cam parts 60 inwardly. Width "W" is preferably less than ¼ the circumference of the wall at the part 60 location.

## Claims

1. A method of producing a flower pot, that includes
a) forming an upright pot wall consisting of plastic material and having truncated conical shape,
b) forming a pot base consisting of plastic material and having generally circular shape, the base having a rim that projects downwardly,
c) assembling the base to lowermost annular extent of said wall, and
d) heat sealing said rim to said wall.

2. A method as claimed in claim 1, including introducing fill into the pot above said base, such fill including at least one of the following:
i) soil in which vegetation roots are grown,
ii) vegetation roots,
iii) flower roots in soil,
iv) water in one of said i), ii) and iii).

3. A method as claimed in claim 1 or 2, including providing drainage openings extending through said base.

4. A method as claimed in claim 3, wherein said openings have cross-section dimensions between about 1/16 inch and ½ inch.

5. A method as claimed in claim 3 or 4, wherein the pot wall and the pot base are separately, formed and then joined, and then providing an identification sleeve and sliding the sleeve onto the wall, to be blocked against downward removal.

6. A method as claimed in any one of the preceding claims, wherein the thickness or thicknesses of said wall and said base is or are between about .005 and .030 inches.

7. A method as claimed in any one of the preceding claims, wherein said plastic material consists of one of the following:
i) polypropylene
ii) polyethylene
iii) PET.

8. A method as claimed in any one of the preceding claims, wherein said wall is formed by cutting a plastic sheet to form a blank forming said blank into said truncated conical wall shape having overlapping edges, and heat sealing said overlapping edges.

9. A method as claimed in any one of the preceding claims, including providing an identification sleeve having truncated conical shape matching the shape of said wall, and assembling said sleeve into position for mechanical retention on the outer side of said wall, by seating of a sleeve lower edge on a ledge on said wall.

10. A method as claimed in claim 9, including providing indicia on said sleeve prior to its assembly onto said wall.

11. A method as claimed in any one of the preceding claims, including providing a protrusion on said wall, for blocking removal of an identifying sleeve assembled onto said wall.

12. A method as claimed in claim 11 wherein said protrusion is provided to project outwardly relative to said wall, and including assembling the sleeve onto said wall to engage said protrusion for blocking sleeve removal.

13. A method as claimed in claim 12, wherein the sleeve has a lower edge engaging said protrusion for effecting said blocking.

14. A method as claimed in claim 11, wherein said protrusion is formed to have a camming surface facing toward the sleeve as the sleeve is assembled over the protrusion and onto said wall, the sleeve deflected outwardly by the protrusion camming surface.

15. A method as claimed in claim 14, wherein the sleeve remains unbonded to said wall and protrusion.

16. A flower pot produced by the method as claimed in any one of the preceding claims.

17. A flower pot comprising in combination:
a) a pot wall consisting of plastic material and having truncated conical shape,
b) a pot base consisting of plastic material and having generally circular shape, the base having a rim that projects downwardly,
c) said base assembled to lowermost extent of said wall, and
d) said base rim sealed to side of said wall.

18. A combination as claimed in claim 17, including fill introduced into the pot above the base, such fill including at least one of the following:
i) soil in which vegetation roots are grown,
ii) vegetation roots,
iii) flower roots in soil,
iv) water in one of said i), ii) and iii).

19. A combination as claimed in claim 17 or 18, including water drainage openings extending through the base, and the wall and base having thickness between about .005 and .030 inches, said plastic material comprising at least one of the following:
i) polypropylene
ii) polyethylene
iii) PET.

20. A combination as claimed in claim 17, 18 or 19 including an identification sleeve having truncated conical shape assembled upwardly onto said wall into ledge supported position, the sleeve configured to be forcibly removed by sliding with interference, over said ledge, downwardly.

21. A combination as claimed in claim 20, including a local protrusion on said wall defining said ledge, said ledge sloping to assist said sleeve downward removal.

22. A combination as claimed in claim 21, wherein the protrusion has a camming surface facing away from said wall, to facilitate sliding of the sleeve upwardly and over said surface for retention of a sleeve lower edge by and immediately above the protrusion.
